Europäisches Patentamt

European Patent Office

Office européen des brevets

(19)

(11) EP 1 353 482 A2

(12) **EUROPEAN PATENT APPLICATION**

(43) Date of publication:
**15.10.2003 Bulletin 2003/42**

(51) Int Cl.⁷: **H04L 12/56**

(21) Application number: **03250883.0**

(22) Date of filing: **13.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **11.04.2002 KR 2002019722**

(71) Applicant: **SAMSUNG ELECTRONICS CO., LTD.**
**Suwon-City, Kyungki-do (KR)**

(72) Inventor: **Hwang, Chan-soo,**
**303-1704 Geumhwa Maeul**
**Yongin-city, Kyungki-do (KR)**

(74) Representative: **Greene, Simon Kenneth**
**Elkington and Fife,**
**Prospect House,**
**8 Pembroke Road**
**Sevenoaks, Kent TN13 1XR (GB)**

(54) **Method and apparatus for forwarding multi-hop and MAC data structure therefore**

(57)    Provided are a method of forwarding a multi-hop data by which a multi-hop data frame having multi-hop information is processed, a mobile terminal for performing the method, and a medium access control (MAC) data structure having a multi-hop frame, which is used in the method. In the method, information is forwarded via one or more mobile terminals or a pre-installed seed to an access point not direct communication between the access point and a mobile terminal. Thus, since the coverage of one AP can be extended, a system can be more economically established and the waste of frequency resources can be reduced.

FIG. 6

**Description**

The present invention relates to a method of forwarding a multi-hop data by which a multi-hop data frame having multi-hop information is processed, a mobile terminal for performing the method, and a medium access control (MAC) data structure having a multi-hop frame, which is used in the method.

Multi-hop forwarding is a method by which information is forwarded through the communication with one or more mobile terminals or a pre-installed seed terminal not the direct communication between an access point (AP) and a mobile terminal (MT).

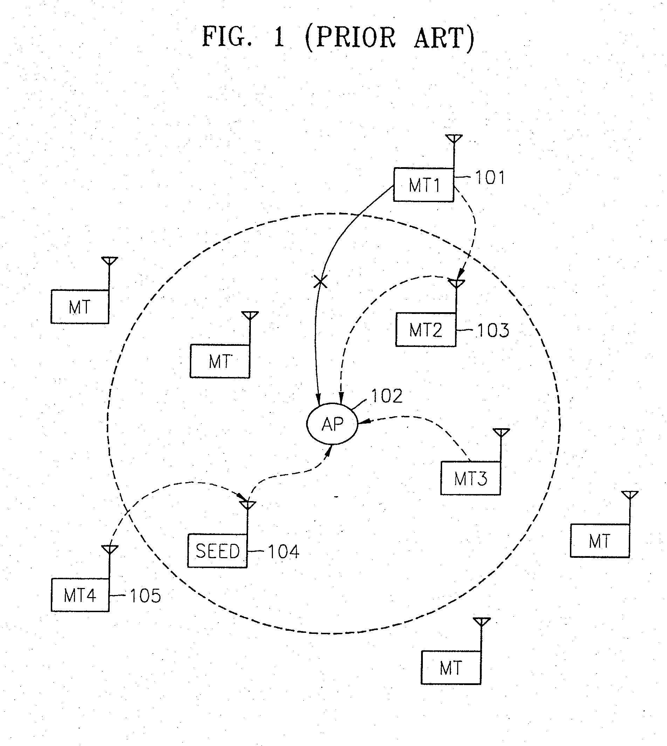

FIG. 1 is a view for explaining a method of forwarding a multi-hop. Referring to FIG. 1, a mobile terminal 1 (MT1) 101 is distant from an access point (AP) 102 or cannot directly communicate with the AP 102 because of the deterioration of channel quality due to fading. Thus, the MT1 101 forwards information that needs to be forwarded to the AP 102 to an MT2 103 having the highest channel quality of MTs around MT1, and then the MT2 103 forwards the received information to the AP 102.

If other MTs to which a multi-hop is to be forwarded do not exist around the MT1 or they have poor channel quality so as not to forward the multi-hop, a seed 104 can be installed to forward the multi-hop.

Let us suppose that an MT4 105 cannot directly communicate with the AP 102 and an MT having high channel quality does not exist around MT4 105. In this case, the MT4 105 forwards information to the seed 104, and then the seed 104 re-forwards the information to the AP 102. Thus, although an MT is positioned beyond the coverage of the AP 102, the MT can communicate with the AP 102. As a result, the coverage of the AP 102 can be extended.

In the prior art multi-hop forwarding method, since a specific time or a specific frequency is assigned to forward a multi-hop, interference between a multi-hop transmission signal and a direct transmission signal can be removed.

However, when an additional new frequency is assigned, each MT requires an additional transmitter and receiver using the assigned frequency. Also, the use of an additional frequency wastes frequency resources. Further, when a specific time is assigned, another MT cannot directly forwards information to an AP, thereby decreasing the efficiency of the whole system.

As LANs are generalized, there are growing interests in wireless LANs that do not require the re-installation of cables when office spaces or production facilities are rearranged. Wireless LANs enable the transmission and reception of various kinds of control information and database searches via mobile terminals, e.g., automatic guided vehicles in factories, hand-held computer terminals in stock exchanges, and the like.

In the case of a wireless LAN, it is easy to rearrange terminals, the communication is possible even during the movement of the terminals, and it is possible to establish the LAN in a quick time. However, in this case, the transmission speed may be relatively low and signal interference may occur compared to wire LAN.

The Institute of Electrical and Electronics Engineers (IEEE) 802 Committee recognized the need for standardizing the wireless LANs, organized the IEEE 802.11 Committee in May, 1991, in order to start the standardization of wireless LAN, prepared a Draft Standard (DS) 3.0 as of 1996, and finally established the standard wireless LAN IEEE 802.11. Due to this, it is expected that the wireless LAN market will become more active based on securing of mutual operations between MTs, the development of related parts, and the like.

The standards of wireless LANs can be classified into the IEEE 802.11 and the HiperLAN standard established by European Telecommunication Standards Institute (ETSI) RES10. The IEEE 802.11 has as its object wireless LANs that provide the maximum transmission speed of 2 Mbps in an Industrial/Scientific/Medical (ISM) frequency band, while the HiperLAN standard provide a maximum transmission speed of 15 Mbps in a band of 5.2GHz.

A HiperLAN2 network is generally composed of many APs. An MT is connected to an AP having the best wireless link in the HiperLAN2 network. Here, the MT can freely move and be connected to another AP by a handover method when the performance of wireless link deteriorates.

In view of an AP, a protocol model of the HiperLAN2 includes a convergence layer, a data link control (DLC) layer, and a physical layer. Among these, the DLC layer is composed of a medium access control (MAC) sublayer, an error control sublayer, and a wireless link control sublayer.

Since a MAC frame of the HiperLAN2 uses the connectivity structure of time division multiplexing (TDM), and not the nonconnectivity structure of Carrier Sense Multiple Access/Collision Avoidance (CSMA/CD) of the IEEE 802.11, the MAC frame provides Quality of Service (QoS), such as a bandwidth, time delay, a bit error rate (BER), and the like. Due to the QoS, various kinds of data, such as images, speeches, etc. can be transmitted at the same time. The MAC frame has a length of 2 msec and 6 channels.

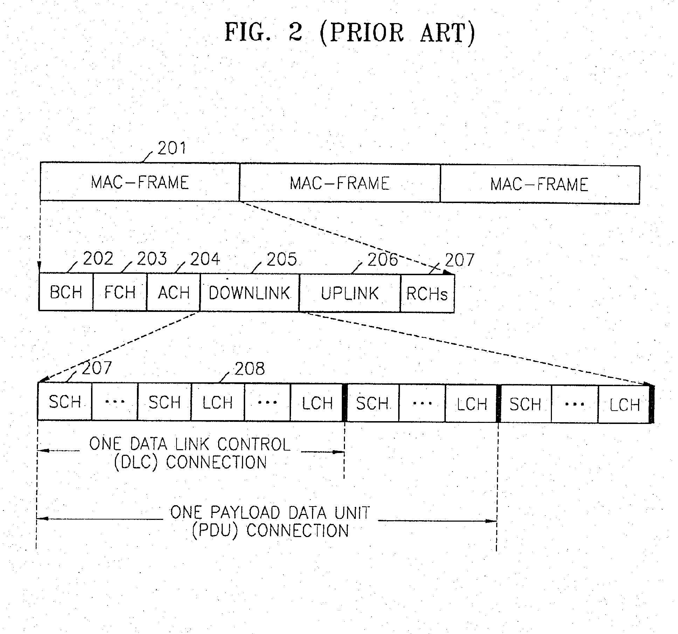

FIG. 2 shows the structure of a MAC frame of the HiperLAN2. Referring to FIG. 2, a MAC frame 201 has a period of 2 msec and is composed of a Broadcast CHannel (BCH) 202, a Frame CHannel (FCH) 203, an Access feedback CHannel (ACH) 204, a Downlink 205, a Uplink 206, and a Random CHannel (RCH) 207.

The format of the BCH 202 has 120 bits and stores Broadcast Control CHannel (BCCH) information. The BCCH is a logic channel which broadcasts control information corresponding to a current MAC frame.

When the FCH 203 is broadcast, the Frame Control CHannel (FCCH) information is transmitted.

The FCCH includes information that defines how system resources are assigned to the current MAC frame.

Results obtained during a random access of a previous MAC frame are transmitted to the ACH 204.

The Downlink 205 transmits data from an AP to an MT, while the Uplink transmits data from the MT to the AP.

The RCH 207 allows the MT to transmit control information to the AP when the transmission of the control information via a Short transport CHannel (SCH) is impossible.

The Downlink 205 and the Uplink 206 are composed of Long transport CHannels (LCHs) 207 and SCHs 208, respectively. Used data is transmitted to the LCH 207 and control information is transmitted to the SCH 208.

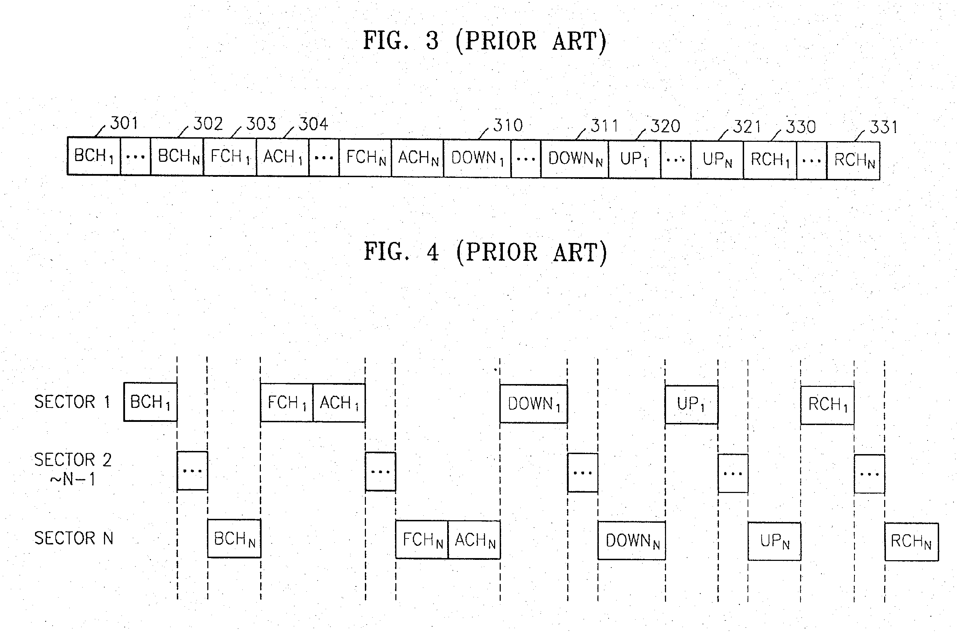

FIG. 3 shows the structure of a MAC frame of the HiperLAN2 having N sectored antennas. Here, the basic structure of the MAC frame is similar to that of the MAC frame of FIG. 2. However, since the MAC frame has N sectors, a Broadcast CHannel 1 ($BCH_1$) 301 through a $BCH_N$ 302, a Frame CHannel 1 ($FCH_1$) 303, an Access feedback CHannel 1 ($ACH_1$) 304 through $ACH_N$, a Downlink 1 ($Down_1$) 310 through a Downlink N ($Down_N$) 311, a Uplink 1 ($Up_1$) 320 through a Uplink N ($Up_N$) 321, and a Random CHannel 1 ($RCH_1$) 330 through a $RCH_N$ 331 are arranged in the order of the sectors. The functions of the channels are the same as described with reference to FIG. 2.

FIG. 4 shows a transmission signal string in each of the sectors having N sectored antennas.

As shown in FIGS. 3 and 4, channels respectively corresponding to sectors are assigned to antennas, and when another sectors use the channels, signals are not transmitted to the other sectors. Thus, sectoring can be performed with only one transmitter which is included in an AP. However, since the other sectors do not operate, frequency efficiency reduces.

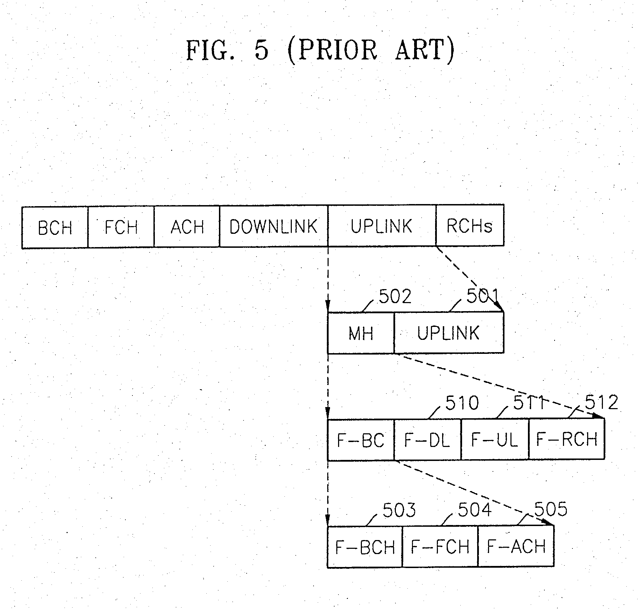

FIG. 5 shows the structure of a conventional MAC frame for forwarding a multi-hop. As shown in FIG. 5, multi-hop forwarding is performed during processing a multi-hop (MH) 502 right before an Uplink 501 starts.

The MH 502 includes a Forward-Broadcast CHannel (F-BC) having a Forward-Broadcast CHannel (F-BCH) 503, a Forward-Frame CHannel (F-FCH) 504, and a Forward-Access feedback CHannel (F-ACH) 505, a Forward-Downlink (F-DL) 510, a Forward-Uplink (F-UL) 511, and a Forward-Random CHannel (F-RCH) 512. The F-BCH 503 broadcasts all MAC frame information about terminals capable of seeding or seeds. The F-FCH 504 forwards MAC frame information storing reserved data about terminals capable of seeding or seeds. The results of attempts to access a MAC frame are forwarded to the F-ACH 505. Then the F-RCH 512A forwards control information to a terminal which can be used as a seed by an MT or a seed.

Since the time required for the communication between different terminals or a terminal and a seed is different from the time required for the transmission and reception of data between an AP and a terminal, interference between a directly transmitted signal and a multi-hop forwarding signal can be removed. However, transmission efficiency decreases by the time required for forwarding the multi-hop. Thus, a multi-hop forwarding method capable of solving this problem is required.

Accordingly, to achieve the above object, there is provided a method of forwarding a multi-hop in a system having an access point, a first mobile terminal that cannot directly communicate with the access point, and a second mobile terminal that can directly communicate with the access point. Data of the first mobile terminal is transmitted to the second mobile terminal while the access point is transmitting or receiving data to or from a mobile terminal beyond a sector to which the second mobile terminal belongs. The second mobile terminal transmits data of the first mobile terminal to the access point by an existing transmission and reception method. The access point receives the data of the first mobile terminal.

To achieve the above object, there is provided a method of forwarding a multi-hop in a system having an access point, a first mobile terminal that cannot directly communicate with the access point, and a second mobile terminal that can directly communicate with the access point. The access point transmits data of the first mobile terminal to the second mobile terminal by an existing transmission and reception method. The second mobile terminal transmits data to the first mobile terminal while the access point is transmitting or receiving data to or from a mobile terminal beyond a sector to which the second mobile terminal belongs. The first mobile terminal receives the transmitted data.

To achieve the above object, there is provided a mobile terminal for forwarding a multi-hop. The mobile terminal includes a communication channel setter, a state determiner, and a multi-hop data transmitter. The communication channel setter sets up a channel for the communication with a first mobile terminal that cannot communicate with an access point. The state determiner determines whether the access point is transmitting or receiving data to or from a mobile terminal beyond a sector to which a second mobile sector belongs. The multi-hop data transmitter transmits and receives data of the first mobile terminal to and from the second mobile terminal if it is determined that the access point is transmitting or receiving data to or from the mobile terminal beyond the sector to which a second mobile sector belongs.

To achieve the above object, there is provided a computer-readable recording medium, on which a medium access control data structure which is used when a mobile terminal that cannot directly communicate with an access point communicates with the access point via another mobile terminal, is recorded. The medium access control data structure includes a broadcast channel information value, a frame channel information value, an access feedback channel information value, a down-data value, a first multi-hop data value, an up-data value, a second multi-hop data value, and a random channel value. The broadcast channel information value broadcasts control information corresponding to a current medium access control frame. The frame channel information value stores frame control channel information that defines how resources of a system are assigned to a current medium access frame. The access feedback channel information value stores the results obtained when a previous medium access control frame is randomly accessed. The down-data value is transmitted from an access point to a mobile terminal. The first multi-hop data value is transmitted from a mobile terminal that cannot directly communicate with the access point. The up-data value is transmitted from a mobile terminal to the access point. The second multi-hop data value is transmitted from the mobile terminal that cannot directly communicate with the access point. The random channel value through which a mobile terminal transmits control information to the access point when a short transport channel is unavailable.

The present invention thus provides a method of and an apparatus for forwarding a multi-hop by which a multi-hop data frame having information on the multi-hop can be processed and a medium access control data structure, having a multi-hop frame, for use in the method.

The above object and advantages of the present invention will become more apparent by describing in detail preferred embodiments thereof with reference to the attached drawings in which:

FIG. 1 is a view for explaining a conventional method of forwarding a multi-hop;
FIG. 2 is a view of the structure of a conventional medium access control (MAC) frame of the HiperLAN2;
FIG. 3 is a view of the structure of a HiperLAN 2 MAC frame having N sectored antennas;
FIG. 4 is a view of a transmission signal string in each sector having N sectored antennas;
FIG. 5 is a view of the structure of a conventional MAC frame for forwarding a multi-hop;
FIG. 6 is a view of the structure of a network for forwarding a multi-hop according to the present invention;
FIG. 7A is a flowchart for explaining a method by which an access point (AP) receives multi-hop data in a multi-hop forwarding network;
FIG. 7B is a flowchart for explaining a method by which an AP transmits multi-hop data in a multi-hop forwarding network;
FIG. 8 is a flowchart for explaining a method by which a mobile terminal (MT) that cannot directly communicate with an AP forwards data to the AP;
FIG. 9 is a flowchart for explaining a method by which another MT seeds data of the MT that cannot directly communicate with the AP;
FIG. 10 is a flowchart for explaining a method by an AP processes multi-hop data;
FIG. 11 is a view of a transmission signal string in each sector according to the present invention;
FIG. 12 is a block diagram of an MT that cannot directly communicate with an AP when forwarding data to the AP;
FIG. 13 is a block diagram of an MT which forwards data of an MT that cannot directly communicate with an AP to the AP;
FIG. 14 is a block diagram of an AP which processes multi-hop data;
FIG. 15 is a graph showing the improved communication range by using a method of forwarding multi-hop according to the present invention with respect to the number of users;
FIG. 16 is a graph showing changes in the communication range when a path loss exponent changes, for the number of users fixed to 12;
FIG. 17 is a graph showing the range rate while using and not using the multi-hop when a path loss exponent changes, for the number of users fixed to 12;
FIG. 18 is a graph showing the improved communication range according to the number of users when only one seed is used to perform the multi-hop forwarding method according to the present invention;
FIG. 19 is a graph showing changes in the communication range when only one seed is used and a path loss exponent changes, for the number of users fixed to 12; and
FIG. 20 is a graph showing the range rates while using and not using the multi-hop, when only one seed is used and a path loss exponent changes, for the number of users fixed to 12.

Hereinafter, preferred embodiments of the present invention will now be described in detail with reference to the attached drawings.

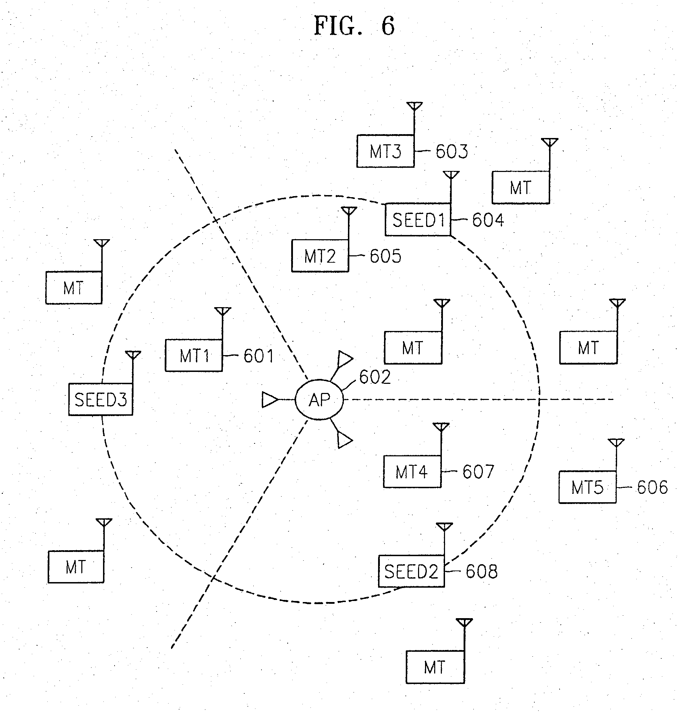

FIG. 6 shows the structure of a network for forwarding a multi-hop according to the present invention. Referring to FIG. 6, when a mobile terminal 1 (MT1) 601 communicates with an access point (AP) 602, an MT3 603 forwards information to a seed1 604 or an MT2 605. Here, an MT5 606 may also forward information an MT4 607 or a seed2 608. The MT2 605 or the MT4 transmits information received from the MT3 603 or the MT5 606 to the AP 602.

Although the MT3 603 or the MT5 605 uses the seed1 604 or the seed2 608, the above-described process is performed.

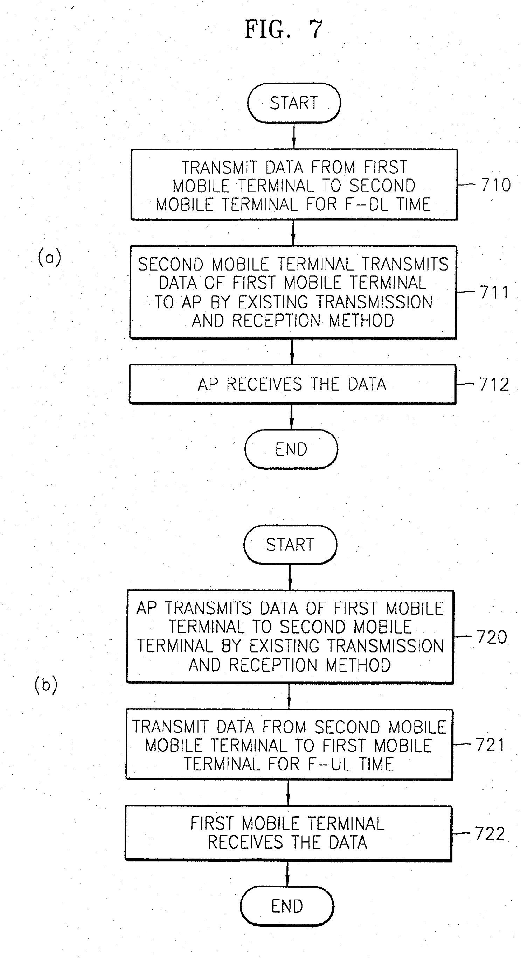

FIG. 7A is a flowchart for explaining a method by which an AP receives multi-hop data in a multi-hop forwarding network.

The multi-hop forwarding network includes MTs that can directly communicate with an AP, and MTs that cannot directly communicate with the AP are positioned outside the multi-hop forwarding network.

The MTs that cannot directly communicate with the AP transmit data to the MTs or seeds which can directly communicate with the AP.

The MTs or the seeds, which can directly communicate with the AP, transmit the MTs' or the seeds' data to the AP. However, since the AP does not always communicate with an MT in its sector, a time delay required for the communication of the AP with an MT in another sector occurs.

In step 710, an MT or a seed transmits/receives the multi-hop data to/from an MT or a seed that cannot directly communicate with the AP. In step 711, the MT or the seed, which receives the multi-hop data, transmits the multi-hop data to the AP and receives the multi-hop data from the AP by a common method.

In step 712, the AP processes the received multi-hop data.

FIG. 7B is a flowchart for explaining a method by which an AP transmits multi-hop data in a multi-hop forwarding network.

In step 720, an AP transmits data of an MT that cannot directly communicate with the AP to an MT that can directly communicate with the AP by an existing transmission and reception method.

In step 721, the transmitted data is transmitted to an MT that cannot directly communicate with the AP within the time when the AP transmits/receives data to/from an MT beyond a sector of the MT that can directly communicate with the AP.

In step 722, the MT that cannot directly communicate with the AP receives the data transmitted in step 721.

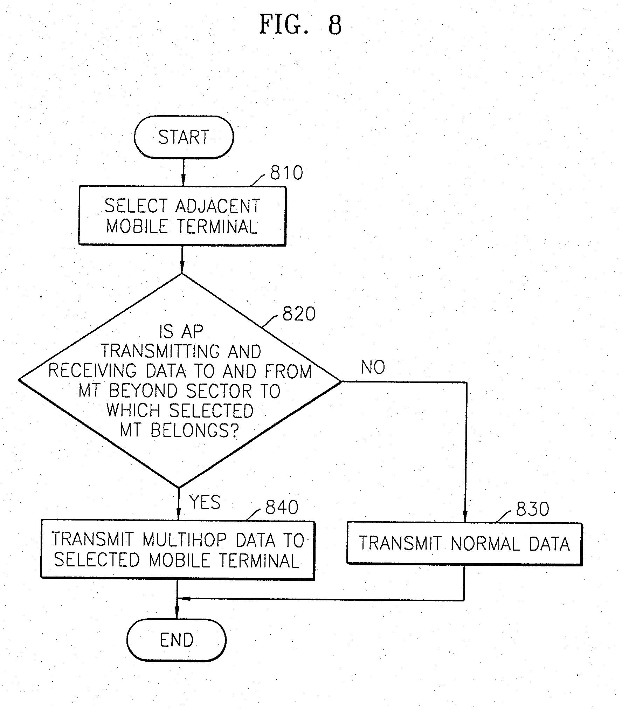

FIG. 8 is a flowchart for explaining a method by which an MT that cannot directly communicate with an AP transmits data to the AP.

In step 810, an adjacent MT that can communicate with an AP is selected.

In step 820, it is determined whether the AP is transmitting/receiving data to/from an MT beyond a sector to which the selected MT belongs.

If it is determined that the AP is transmitting/receiving data to/from the MT beyond the sector to which the selected MT belongs, in step 840, multi-hop data is transmitted to the selected MT. If not, in step 830, the transmission of normal data is performed. In other words, if the selected MT is transmitting/receiving its own data to/from the AP, the transmission process is performed.

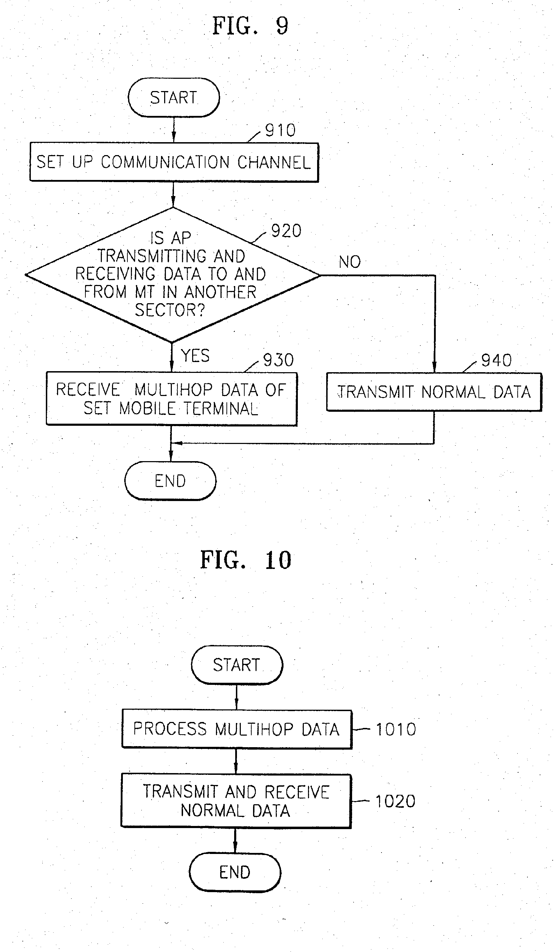

FIG. 9 is a flowchart for explaining a method by which an MT seeds data from an MT that cannot directly communicate with an AP.

In step 910, a channel for the communication with an adjacent MT beyond a sector in which the communication with the AP is possible is set up.

In step 920, it is determined whether the AP is transmitting/receiving data to/from another MT beyond a sector to which the adjacent MT belongs. As previously described, since the AP transmits/receives data to/from MTs in another sector, step 920 is performed to use the time required for the transmission and reception of data between the AP and the MTs in another sector.

If it is determined that the AP is transmitting/receiving data to/from another MT beyond the sector to which the adjacent MT belongs, in step 930, the adjacent MT receives data of an adjacent MT that cannot communicate with the AP. If not, in step 940, the transmission of normal data is performed. In other words, if an MT is transmitting/receiving its own data to/from the AP, the transmission process is performed.

FIG. 10 is a flowchart for explaining a method by which an AP processes multi-hop data.

If the AP is transmitting/receiving data to/from an MT beyond a sector to which the MT belongs, in step 1010, the AP receives data of an adjacent MT that cannot communicate with the AP via an MT that can communicate with the AP. If not, in step 1020, the AP transmits/receives normal data to/from an MT in a sector with which the AP is communicating.

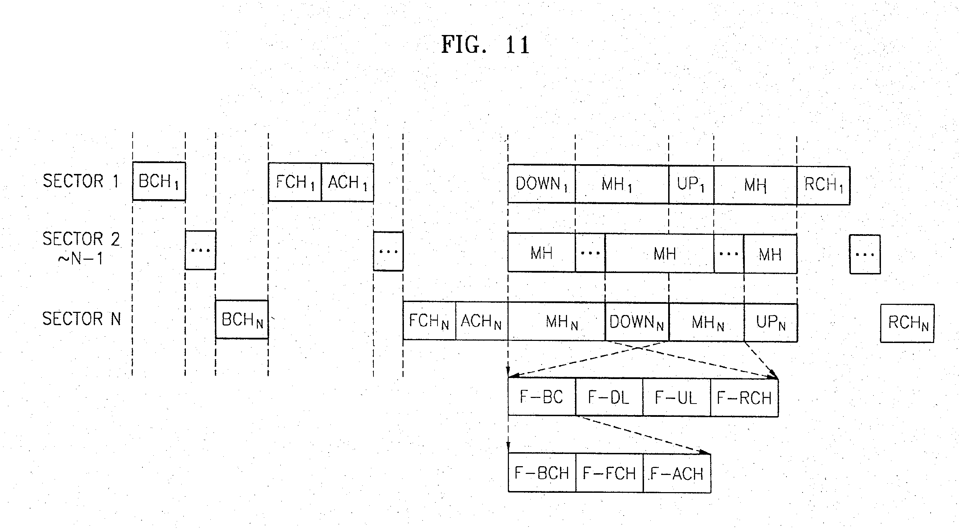

FIG. 11 shows a transmission signal string in each sector according to the present invention. The basic structure is similar to the structure of the transmission signal string of FIG. 4 except that multi-hop frames are assigned to a sector with which an AP does not communicate to forward multi-hop, and when the multi-hop frames do not sequentially exist and resources for the communication with the AP are assigned to a given sector, common downlink or uplink communication is performed, and then the process returns to the original multi-hop frames.

In order to apply the above-described method to the HiperLAN2, the multi-hop frame structure of FIG. 5 is used. A multi-hop forwarding frame is composed of a Broadcast control CHannel having a Forward-Broadcast CHannel (F-BCH) 503 which broadcasts all MAC frame information about sectors, a Forward-Frame CHannel (F-FCH) 504 which forwards MAC frame information storing reserved data about the sectors, a Forward-Access feedback CHannel (F-ACH) 505 to which the results of attempts to access a MAC frame are forwarded, a Forward-Downlink 510, a Forward-Uplink 511, and a Forward-Random CHannel (F-RCH) 512 through which an MT forwards control information to an AP.

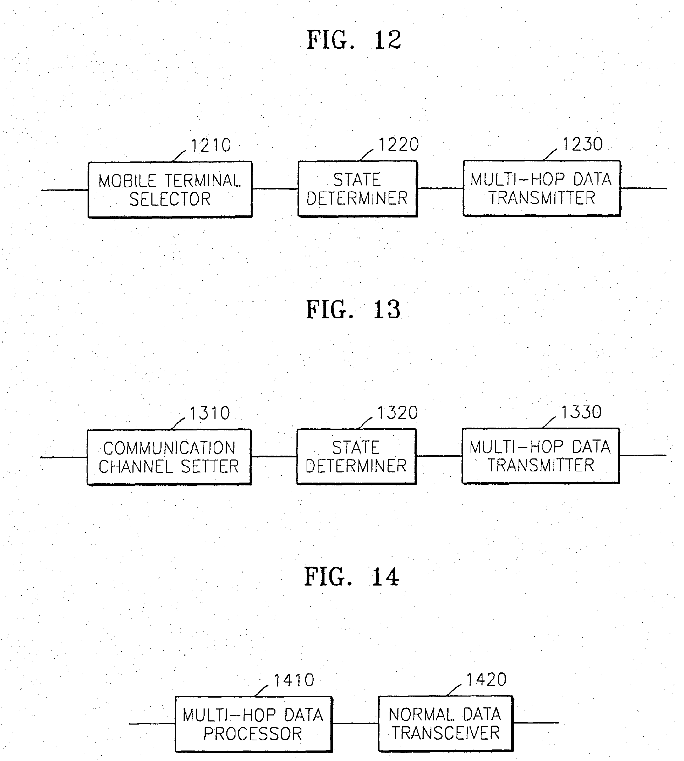

FIG. 12 is a block diagram of an MT that cannot directly communicate with an AP when forwarding data to the AP. Referring to FIG. 12, an MT selector 1210 selects an adjacent MT that can communicate with the AP.

A state determiner 1220 determines whether the AP is transmitting/receiving data to/from an MT beyond a sector to which the selected MT belongs.

A multi-hop data transmitter 1230 transmits and receives the multi-hop data within the time when the AP is transmitting data to or receiving data from the MT beyond the sector to which the selected MT belongs, based on the results determined by the state determiner 1220. Thus, the MT that cannot directly communicate with the AP can communicate with the AP.

FIG. 13 is a block diagram of an MT which forwards data of an MT that cannot directly communicate with an AP to the AP.

A communication channel setter 1310 sets up a channel for the communication with an adjacent MT that cannot directly communicate with the AP.

A state determiner 1320 determines whether the AP is transmitting data to or receiving data from an MT in another sector.

A multi-hop data transmitter 1330 transmits data to and receives data from the adjacent MT that cannot directly communicate with the AP if it is determined that the AP is transmitting data to or receiving data from the MT in another sector.

FIG. 14 is a block diagram of an AP which processes multi-hop data.

If the AP is transmitting/receiving data to/from an MT beyond a sector to which the MT belongs, a multi-hop data processor 1410 receives data of an adjacent MT that cannot directly communicate with the AP via an MT that can communicate with the AP.

If not, a normal data transceiver 1420 transmits/receives normal data to/from an MT in a sector with which the AP is communicating.

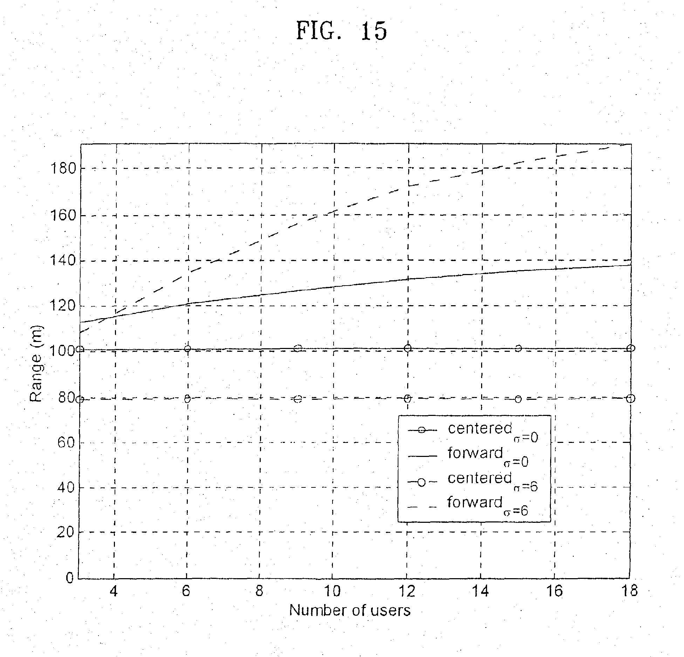

FIGS. 15 through 20 are graphs showing the improved communication range by using the multi-hop forwarding method according to the present invention. The conditions to perform the multi-hop forwarding method are as follows. First, it is assumed that channels are a log distance model and a lognormal fading model. Here, the path loss is given by equation 1.

$$\text{Path loss} = 46.76 + \alpha 10 \log(d) + \text{Fading} \qquad (1)$$

where "d" is a meter distance between a transmitter and a receiver and "$\alpha$" is a path loss exponent.

A target outage probability is 10%, signal-to-noise ratio (SNR) is $10^{-7}$ bit error rate (BER). A transmitting and receiving cell displays a uniform distribution and the number of users displays a Poisson distribution.

FIG. 15 shows the improved communication range by the use of the multi-hop forwarding method according to the present invention with respect to the number of users. Here, it is assumed that the path loss exponent "$\alpha$" is 3.

As seen in FIG. 15, if multi-hop is not provided, the range does not vary with the average number of users. However, if multi-hop is provided, a gain could be obtained. In particular, if lognormal fading exists, the range may double due to a diversity effect on the lognormal fading.

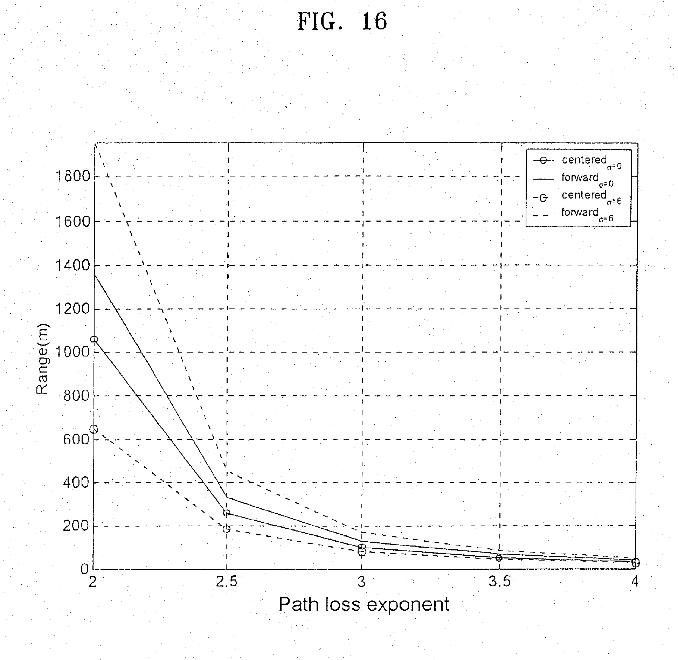

FIG. 16 shows changes in the communication range when a path loss exponent changes, for the number of users fixed to 12.

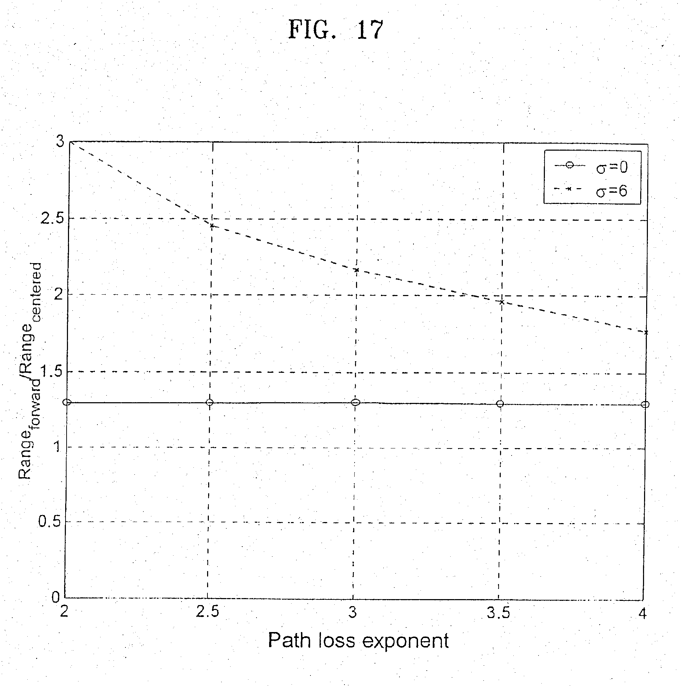

FIG. 17 shows range rates while using and not using the multi-hop when a path loss exponent changes, for the number of users fixed to 12.

As seen in FIGS. 16 and 17, when the lognormal fading is great, the range could increase as much as three times. Also, it can be seen that the range is inversely proportional with the path loss exponent.

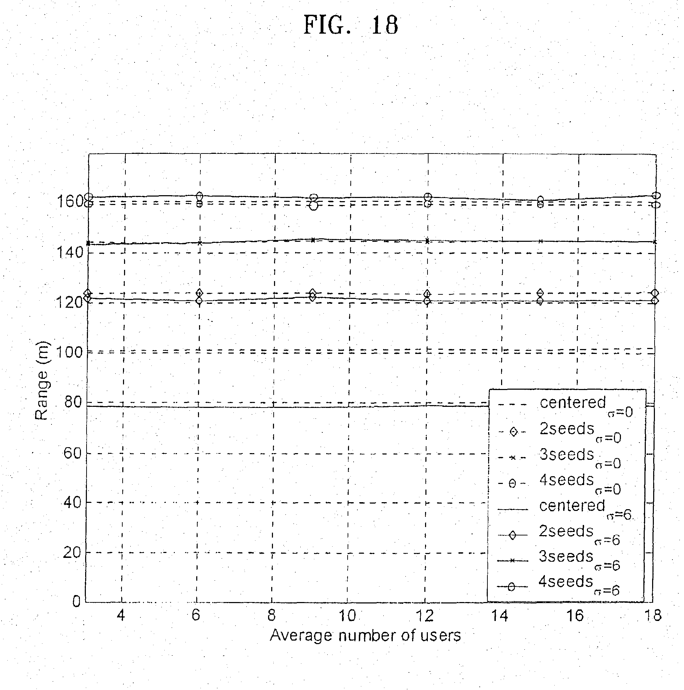

FIGS. 18 through 20 show the results obtained under the same conditions as those in FIGS. 15 and 17 except that an MT cannot support multi-hop and only one seed is used.

FIG. 18 shows the improved communication range according to the number of users when only one seed is used for the multi-hop forwarding method according to the present invention.

In FIG. 18, since it can bee seen that the range increases with an increase in the number of seeds, the increase in the range is irrelevant to the number of users.

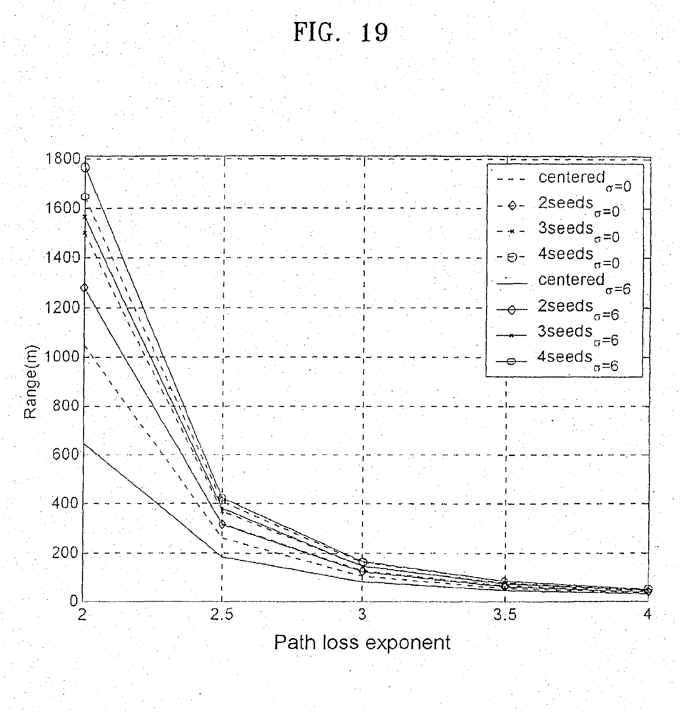

FIG. 19 shows changes in the communication range when only one seed is used and a path loss exponent changes, for the number of users fixed to 12.

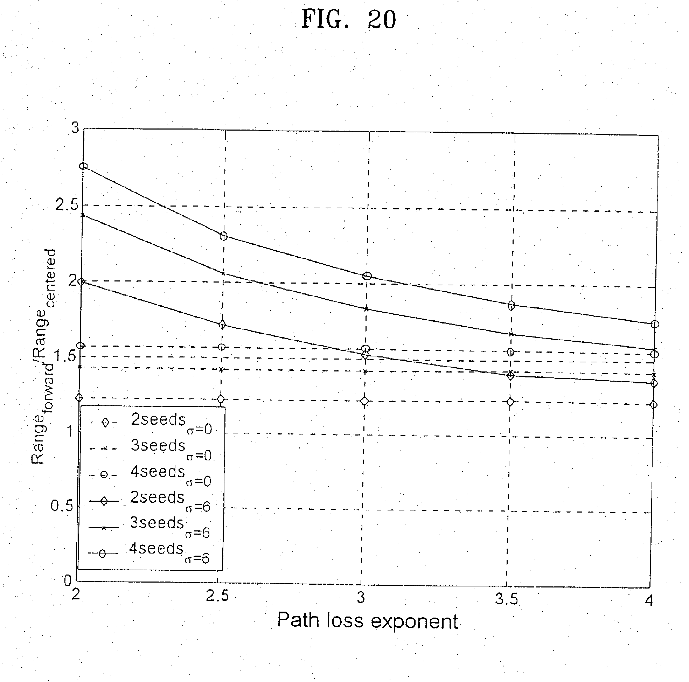

FIG. 20 shows range rates while using and not using the multi-hop when only one seed is used and a path loss exponent changes, for the number of users fixed to 12.

It can be seen that the improved communication range is not greater than the case when all of the MTs support multi-hop, but the improved range is similar to the case when all of the MTs support multi-hop if the number of seeds is about 4.

As described above, ones of a plurality of sectors which are communicating with an AP transmit data to the AP through the downlink and uplink, and, at the same time, sectors which are not communicating with the AP process multi-hop data frames having multi-hop information. Thus, since the coverage of one AP can be extended, a system can be more economically established and the waste of frequency resources can be reduced.

The above-described embodiments of the present invention can be drawn up as computer programs and can be realized in general-purpose computers using computer-readable recording media.

Also, data structures used in the embodiments of the present invention can be recorded on the computer-readable recording media through many means.

The computer-readable media include storing media, such as magnetic storing media (e.g., ROMs, floppy discs, hard disc, and the like), optical reading media (e.g., CD-ROMs, DVDs, and the like), and carrier waves (e.g., transmission via the Internet).

While this invention has been particularly shown and described with reference to preferred embodiments thereof, it will be understood by those skilled in the art that various changes in form and details may be made therein without departing from the spirit and scope of the invention as defined by the appended claims.

**Claims**

1.  A method of forwarding a multi-hop in a system having an access point, a first mobile terminal that cannot directly communicate with the access point, and a second mobile terminal that can directly communicate with the access point, the method comprising:

    (a) transmitting data of the first mobile terminal to the second mobile terminal while the access point is transmitting or receiving data to or from a mobile terminal beyond a sector to which the second mobile terminal belongs;
    (b) the second mobile terminal transmitting data of the first mobile terminal to the access point by an existing transmission and reception method; and
    (c) the access point receiving the data of the first mobile terminal.

2.  The method of claim 1, wherein the second mobile terminal is a seed which transmits data of a mobile terminal, that cannot directly communicate with the access point, to the access point.

3.  The method of claim 1 or 2, wherein the second mobile terminal

    (a) sets up a channel for the communication with the first mobile terminal,
    (b) determines whether the access point is transmitting data to or receiving data from a mobile terminal beyond the sector to which the second mobile terminal belongs; and
    (c) receives data of the first mobile terminal if it is determined that the access point is transmitting or receiving data to or from the mobile terminal beyond the sector to which the second mobile terminal belongs.

4.  A method of forwarding a multi-hop in a system having an access point, a first mobile terminal that cannot directly communicate with the access point, and a second mobile terminal that can directly communicate with the access point, the method comprising:

    (a) the access point transmitting data of the first mobile terminal to the second mobile terminal by an existing transmission and reception method;
    (b) the second mobile terminal transmitting data to the first mobile terminal while the access point is transmitting or receiving data to or from a mobile terminal beyond a sector to which the second mobile terminal belongs; and
    (c) the first mobile terminal receiving the data transmitted in step (b).

5.  A computer-readable recording medium on which a computer program for executing the method of any of claims 1 to 4 is recorded.

6.  A mobile terminal for forwarding a multi-hop, the mobile terminal comprising:

    a communication channel setter which sets up a channel for the communication with a first mobile terminal that cannot communicate with an access point;
    a state determiner which determines whether the access point is transmitting or receiving data to or from a mobile terminal beyond a sector to which a second mobile sector belongs; and
    a multi-hop data transmitter which transmits and receives data of the first mobile terminal to and from the second mobile terminal if it is determined that the access point is transmitting or receiving data to or from the mobile terminal beyond the sector to which a second mobile sector belongs.

7.  A computer-readable recording medium, on which a medium access control data structure which is used when a mobile terminal that cannot directly communicate with an access point communicates with the access point via another mobile terminal, is recorded, the medium access control data structure comprising:

    a broadcast channel information value which broadcasts control information corresponding to a current medium access control frame;
    a frame channel information value which stores frame control channel information that defines how resources of a system are assigned to a current medium access frame;
    an access feedback channel information value which stores the results obtained when a previous medium access control frame is randomly accessed;
    a down-data value which is transmitted from an access point to a mobile terminal;
    a first multi-hop data value which is transmitted from a mobile terminal that cannot directly communicate with the access point;
    an up-data value which is transmitted from a mobile terminal to the access point;
    a second multi-hop data value which is transmitted from the mobile terminal that cannot directly communicate with the access point; and

a random channel value through which a mobile terminal transmits control information to the access point when a short transport channel is unavailable.

8. The computer-readable recording medium of claim 7, wherein the first and second multi-hop data values respectively comprises:

a forward-broadcast control channel information value which broadcasts control information corresponding to a current medium access control frame;
a forward-downlink channel information value which receives data from the access point and forwards the data to a mobile terminal;
a forward-uplink channel information value which receives data from the mobile terminal and forwards the data to the access point; and
a forward-random channel information value through which the mobile terminal forwards the control information to the access point.

9. The computer-readable recording medium of claim 8, wherein the forward-broadcast control channel information value comprises:

a broadcast channel information value which broadcasts all medium access control frame information about sectors;
a frame channel information value which forwards medium access control frame information representing reserved data about the sectors; and
an access feedback channel information value to which the results of attempts to access a medium access control frame are forwarded.

FIG. 1 (PRIOR ART)

# FIG. 2 (PRIOR ART)

ONE DATA LINK CONTROL (DLC) CONNECTION

ONE PAYLOAD DATA UNIT (PDU) CONNECTION

## FIG. 3 (PRIOR ART)

| BCH$_1$ | ... | BCH$_N$ | FCH$_1$ | ACH$_1$ | ... | FCH$_N$ | ACH$_N$ | DOWN$_1$ | ... | DOWN$_N$ | UP$_1$ | ... | UP$_N$ | RCH$_1$ | ... | RCH$_N$ |

301  302  303  304  310  311  320  321  330  331

## FIG. 4 (PRIOR ART)

| SECTOR 1 | BCH$_1$ | | FCH$_1$ | ACH$_1$ | DOWN$_1$ | UP$_1$ | RCH$_1$ |

| SECTOR 2 ~N−1 | ... | ... | ... | ... | ... |

| SECTOR N | BCH$_N$ | FCH$_N$ | ACH$_N$ | DOWN$_N$ | UP$_N$ | RCH$_N$ |

EP 1 353 482 A2

FIG. 5 (PRIOR ART)

| BCH | FCH | ACH | DOWNLINK | UPLINK | RCHs |
|-----|-----|-----|----------|--------|------|

502 501

| MH | UPLINK |
|----|--------|

510 511 512

| F−BC | F−DL | F−UL | F−RCH |
|------|------|------|-------|

503 504 505

| F−BCH | F−FCH | F−ACH |
|-------|-------|-------|

FIG. 6

# FIG. 7

(a)

START

TRANSMIT DATA FROM FIRST MOBILE TERMINAL TO SECOND MOBILE TERMINAL FOR F-DL TIME —710

SECOND MOBILE TERMINAL TRANSMITS DATA OF FIRST MOBILE TERMINAL TO AP BY EXISTING TRANSMISSION AND RECEPTION METHOD —711

AP RECEIVES THE DATA —712

END

(b)

START

AP TRANSMITS DATA OF FIRST MOBILE TERMINAL TO SECOND MOBILE TERMINAL BY EXISTING TRANSMISSION AND RECEPTION METHOD —720

TRANSMIT DATA FROM SECOND MOBILE MOBILE TERMINAL TO FIRST MOBILE TERMINAL FOR F-UL TIME —721

FIRST MOBILE TERMINAL RECEIVES THE DATA —722

END

# FIG. 8

```
                    ┌─────────┐
                    │  START  │
                    └─────────┘
                         │
                         ▼              ╱ 810
              ┌──────────────────────┐
              │   SELECT ADJACENT    │
              │   MOBILE TERMINAL    │
              └──────────────────────┘
                         │
                         ▼           ╱ 820
                       ╱─────╲
                     ╱  IS AP  ╲
                   ╱ TRANSMITTING ╲
                 ╱ AND RECEIVING   ╲        NO
                ╱ DATA TO AND FROM   ╲─────────────┐
                ╲ MT BEYOND SECTOR TO╱             │
                 ╲ WHICH SELECTED   ╱              │
                   ╲ MT BELONGS?  ╱                │
                     ╲─────────╱                   │
                         │ YES   ╱ 840             │  ╱ 830
                         ▼                         ▼
              ┌──────────────────────┐   ┌──────────────────────┐
              │ TRANSMIT MULTIHOP    │   │ TRANSMIT NORMAL DATA │
              │ DATA TO SELECTED     │   └──────────────────────┘
              │ MOBILE TERMINAL      │              │
              └──────────────────────┘              │
                         │◄───────────────────────────┘
                         ▼
                    ┌─────────┐
                    │   END   │
                    └─────────┘
```

## FIG. 9

START

SET UP COMMUNICATION CHANNEL — 910

IS AP TRANSMITTING AND RECEIVING DATA TO AND FROM MT IN ANOTHER SECTOR? — 920

NO

YES

RECEIVE MULTIHOP DATA OF SET MOBILE TERMINAL — 930

TRANSMIT NORMAL DATA — 940

END

## FIG. 10

START

PROCESS MULTIHOP DATA — 1010

TRANSMIT AND RECEIVE NORMAL DATA — 1020

END

## FIG. 11

| SECTOR 1 | $BCH_1$ | | | $FCH_1$ | $ACH_1$ | | $DOWN_1$ | $MH_1$ | $UP_1$ | MH | $RCH_1$ |

| SECTOR 2 ~N-1 | | ⋯ | | ⋯ | | MH | ⋯ | MH | ⋯ | MH | ⋯ |

| SECTOR N | | | $BCH_N$ | | $FCH_N$ | $ACH_N$ | $MH_N$ | $DOWN_N$ | $MH_N$ | $UP_N$ | $RCH_N$ |

| F−BC | F−DL | F−UL | F−RCH |

| F−BCH | F−FCH | F−ACH |

# FIG. 12

| 1210 | 1220 | 1230 |
|---|---|---|
| MOBILE TERMINAL SELECTOR | STATE DETERMINER | MULTI−HOP DATA TRANSMITTER |

# FIG. 13

| 1310 | 1320 | 1330 |
|---|---|---|
| COMMUNICATION CHANNEL SETTER | STATE DETERMINER | MULTI−HOP DATA TRANSMITTER |

# FIG. 14

| 1410 | 1420 |
|---|---|
| MULTI−HOP DATA PROCESSOR | NORMAL DATA TRANSCEIVER |

FIG. 15

FIG. 16

FIG. 17

# FIG. 18

# FIG. 19

FIG. 20